# EUROPÄISCHE PATENTSCHRIFT

(11) **EP 3 374 463 B1**
(45) Veröffentlichungstag und Bekanntmachung des Hinweises auf die Patenterteilung: **01.03.2023**
(21) Anmeldenummer: 16816571.0
(22) Anmeldetag: 10.11.2016
(51) Int. Cl.: C09K 5/10, C09K 5/20, C23F 11/08

(54) **SILIKATHALTIGES KÜHLMITTELKONZENTRAT**
COOLANT CONCENTRATE CONTAINING SILICATE
CONCENTRÉ DE LIQUIDE DE REFROIDISSEMENT CONTENANT DU SILICATE

(30) Priorität: 11.11.2015 DE 102015014480
(43) Veröffentlichungstag der Anmeldung: 19.09.2018
(73) Patentinhaber: Rowe Holding GmbH, 67547 Worms (DE)
(72) Erfinder: BERGER, Stefan, 67547 Worms (DE)
(74) Vertreter: Bensen, Harald
(86) Internationale Anmeldenummer: PCT/DE2016/000395
(87) Internationale Veröffentlichungsnummer: WO 2017/080542

(56) Entgegenhaltungen:
- DE-A1- 10 235 477
- US-A- 4 487 712
- US-A1- 2014 366 817

## Beschreibung

Die vorliegende Erfindung betrifft ein silikathaltiges Kühlmittelkonzentrat und eine Verwendung des Kühlmittelkonzentrats.

Kühlmittelkonzentrate für den Kühlkreislauf von Verbrennungskraftmaschinen, beispielsweise in Kraftfahrzeugen, bestehen überwiegend aus einer gefrierpunkterniedrigenden Flüssigkeit, insbesondere Ethylenglykol oder Propylenglykol. Vor dem Gebrauch werden diese zur Gefrierpunktserniedrigung in der Regel 1:1 v/v-% mit Wasser gemischt. Da Glykol-Wassermischungen korrosiv sind, werden den Mischungen verschiedene Korrosionsinhibitoren zugesetzt.

Aus der DE 101 28 530 A1, DE 196 25 692 A1, DE 699 05 072 T2, EP 0 863 960 B1, US 2014/0224193 A1 und US 6 413 445 B1 sind Kühlmittelzusammensetzungen bekannt.

In der US 4 487 712 A werden durch Gelatieren stabilisierte wasserlösliche Silikate beschrieben.

In der DE 102 35 477 A1 werden glykolfreie wässrige Gefrierschutzmittel, die Dicarbonsäuresalze enthalten, beschrieben.

In der US 2014 / 0 366 817 A1 werden Motorkühlmittelzusammensetzungen und ein Verfahren zur Erhöhung der Betriebsdauer einer Kühlmittelzusammensetzung im Motor beschrieben.

Heutzutage wird eine Vielzahl von Forderungen an Korrosionsinhibitoren gestellt. Sie müssen in niedriger Konzentration wirksam sein und von ihnen darf keine toxikologische oder umweltgefährdende Wirkung ausgehen. Alle Werkstoffe, welche im Kühlkreislauf vorliegen, wie zum Beispiel Eisen, Kupfer, Messing, Lötzinn, Aluminium und Aluminiumlegierungen sowie nichtmetallische Komponenten, wie Elastomere, müssen zuverlässig auch bei hohen thermischen Belastungen vor den verschiedensten Formen der Korrosion geschützt werden. Die Vielzahl an Metallen im Kühlreislauf führt zu potentiellen Korrosionsproblemen, insbesondere wenn die Metalle miteinander elektrisch leitend in Kontakt stehen. An diesen Stellen können Lochfraß, Kontakt-, Spalt-, Flächen-, Muldenkorrosion oder Kavitation auftreten.

Die Anwesenheit von Korrosionsprodukten im Kühlsystem kann den Wärmeübergang vom Motor auf die Kühlflüssigkeit behindern, was unweigerlich zu einem Überhitzen des Motors und einem Bauteilausfall führt.

In Folge der immer steigenden Spitzentemperaturen, größeren Temperaturwechsel und höheren Strömungsgeschwindigkeiten, bei gleichzeitiger Reduktion des Kühlmittelvolumens, werden heutzutage immer größere Ansprüche an die thermische Stabilität der Kühlmittel gestellt.

Damit Passagierfahrzeuge und Lastkraftwagen die gesetzlichen Umweltauflagen eines geringeren Schadstoffausstoßes unter gleichzeitig reduziertem Kraftstoffverbrauch einhalten können, werden seitens der Automobilhersteller eine Vielzahl von Komponenten des Kühlmittelkreislaufs aus Leichtmetallen wie Aluminium und seinen Legierungen gefertigt.

Typische Bauteile in Wärmetauschern sind beispielsweise die Röhren, durch welche das Kühlmittel fließt und in welchen der Wärmeaustausch erfolgt oder die Lamellen zwischen den Röhren zur Abfuhr der Wärme an die Umgebung.

Überwiegend werden Kraftfahrzeugwärmeaustauscher aus Aluminium bzw. Aluminiumlegierungen nach dem Controlled Atmosphere Brazing Verfahren ([Hart-]Löten in kontrollierten Atmosphären - CAB) gefertigt. Dieses Verfahren weist gegenüber anderen Lötmethoden die Vorteile auf, dass es zu keiner Bildung von Aluminiumoxid kommt, es besonders kostengünstig ist und gleichzeitig qualitativ hochwertige Bauteile liefert. Typischerweise werden die Bauteile mittels eines Lots, dessen Schmelzpunkt unterhalb der des Werkstoffes liegt, durch die Ausbildung einer metallurgischen Bindung zusammengefügt.

Um die für den Prozess natürliche Aluminiumoxidschutzschicht zu entfernen, wird ein Flussmittel auf die Metalloberfläche aufgebracht, so dass das Lot frei fließen kann. Als Flussmittel werden gewöhnlich Gemische aus Kaliumfluoroaluminaten der Formel K₁₋₃AlF₄₋₆, welche z.B. unter dem Handelsnamen NOCOLOK^{®} bekannt sind, verwendet.

Während des Betriebs können sich jedoch von den Bauteilen, durch welche das Kühlmittel fließt, Flussmittelrückstände lösen und in das Kühlsystem gelangen. Obwohl fluoridhaltige Flussmittel gegenüber Aluminium als nicht korrosiv angesehen werden, kommt es immer wieder zu größeren Korrosionsproblemen.

Als besonders wirkungsvolle Korrosionsinhibitoren für Aluminiumbauteile haben sich Alkalimetallsilikate hervorgetan, welche als solche den Kühlmitteln zugesetzt werden. Man geht davon aus, dass Silikate auf der Metalloberfläche eine durchgehend geschlossene, monomolekulare korrosionsinhibierende Schutzschicht ausbilden.

Silikate neigen jedoch dazu in Gegenwart von Flussmittelrückständen auszufallen und irreversibel in Polymerisationsreaktionen gelartige Niederschläge zu bilden. Die Niederschläge führen dazu, dass Kühlerlamellen verstopfen, der Wärmeübergang von den Werkstoffen im Kühlsystem in die Wärmeträgerflüssigkeit behindert wird und dadurch der Motor überhitzt, die Wasserpumpe beschädigt wird oder andere Motorschäden eintreten.

Diese Effekte werden insbesondere dann beobachtet, wenn in Kühlsystemen der Silikatanteil deutlich unterhalb von 30 ppm gesunken ist. Da der Anteil an Aluminiumbauteilen im Kühlkreislauf in den vergangenen Jahren stetig zugenommen hat, nimmt seitens der Automobilindustrie die Nachfrage nach flussmittelresistenten, stabilisierten, silikathaltigen, organischen Kühlmitteltechnologien, der sogenannten Si-OAT (OAT: organische Additiv Technologie), immer mehr zu.

Deshalb gibt es eine Notwendigkeit ein Kühlmittel auf Si-OAT Basis bereitzustellen, welches eine hohe Resistenz gegenüber Flussmittelrückständen aufweist und bei welchem auch bei hohen thermischen Belastungen der Siliziumgehalt in Gegenwart von Flussmittel nahezu unverändert bleibt.

Aufgabe der vorliegenden Erfindung ist es ein Kühlmittel auf Si-OAT Basis bereitzustellen, welches auch bei hohen thermischen Belastungen eine hohe Resistenz gegenüber Flussmittelrückständen aufweist und somit die Bildung von Al-O-Si Bindungen und von schwerlöslichem Al(OH)₃ vermindert bzw. verhindert.

Die Aufgabe der vorliegenden Erfindung wird durch ein silikathaltiges Kühlmittelkonzentrat gelöst, umfassend
- mehr als 90 Gew.-% bezogen auf die Gesamtmenge des Konzentrats mindestens einer gefrierpunkterniedrigenden Flüssigkeit, wobei die gefrierpunkterniedrigende Flüssigkeit eine Verbindung aus der Gruppe umfassend Alkylenglykole, Alkylenglykolether, Glykolether, Glyzerin oder eines Gemisches zweier oder mehrerer dieser Verbindungen ist,
- 1,5 bis 5 Gew.-% bezogen auf die Gesamtmenge des Konzentrats mindestens eines Gemischs aus mindestens zwei gesättigten aliphatischen Dicarbonsäuren,
- 0,1 bis 1 Gew.-% bezogen auf die Gesamtmenge des Konzentrats mindestens einer gesättigten aliphatischen oder hydroxylhaltigen aromatischen Monocarbonsäure,
- 0,05 bis 0,5 Gew.-% bezogen auf die Gesamtmenge des Konzentrats mindestens eines Azols,
- 0,01 bis 0,06 Gew.-% bezogen auf die Gesamtmenge des Konzentrats mindestens eines stabilisierenden Silikats,
- 0,01 bis 1 Gew.-% bezogen auf die Gesamtmenge des Konzentrats mindestens einer Phosphonocarbonsäure und
- 0,01 bis 1 Gew.-% bezogen auf die Gesamtmenge des Konzentrats mindestens eines Heteropolykomplexanions aus der Gruppe IIIA bis VIA des Periodensystems der Elemente,

wobei das Heteropolykomplexanion ein Molybdatanion ist oder ein Anion aus der Gruppe umfassend Phosphomolybdate, Siliziummolybdate, Manganmolybdate, Siliziumwolframate, Telluriummolybdate, Arseniummolybdate oder einer Mischung hiervon ist und
wobei die Monocarbonsäure eine von Benzoesäure abgeleitete Carbonsäure mit ein oder zwei Hydroxylgruppen ist.

Der pH-Wert des Kühlmittelkonzentrats liegt zwischen 7 und 9,5, sein Wasserwert nach Karl-Fischer unter 3 % und der Siliziumgehalt bei ungefähr 200 ppm bis 300 ppm. Die Anwendung des Kühlmittels ist dabei nicht auf geschlossene Kühlkreisläufe in Passagierfahrzeugen und Lastkraftwagen beschränkt, sondern kann auch in offenen Kühlkreisläufen wie Zentralheizungen etc. Verwendung finden.

Das silikathaltige Kühlmittelkonzentrat weist eine Vielzahl von Vorteilen auf: es besitzt gute Fließeigenschaften, eine hohe Stabilität, insbesondere eine gute Hochtemperaturstabilität, wie sie bei Kraftfahrzeugmotoren mit großer PS-Zahl benötigt wird, da die Motoren hier sehr heiß werden, es ist besonders gut geeignet für die Buntmetallinhibierung, beispielweise für Kupfer und es bietet einen guten Aluminiumkorrosionsschutz, da Silikat dem Aluminiumschutz dient; das Silikat wird dabei stabilisiert, da es sonst zu Ausfällung und damit zu Verstopfungen des Kühlsystems kommt.

Die gefrierpunkterniedrigende Flüssigkeit dient dazu den Gefrierpunkt der (Kühlmittel-)Flüssigkeit herabzusetzten.

Nachfolgend wird die Zusammensetzung eines silikathaltigen Kühlmittels respektive einer Wärmeträgerflüssigkeit beschrieben, welche eine hohe Flussmittelverträglichkeit der Inhaltsstoffe aufweist.

In einem Kühlmittel bzw. einer Wärmeträgerflüssigkeit bestehend aus einer gefrierpunktserniedrigenden Komponente, zweier unterschiedlich gesättigter aliphatischer Dicarbonsäuren, einer Monocarbonsäure, einem Azol und eines handelsüblichen stabilisierten Silikats, wird durch den Einsatz eines Heteropolykomplexanions in Kombination mit einer Phosphonocarbonsäure eine gesteigerte Flussmittelverträglichkeit von Aluminium und Aluminiumlegierungen erzielt.

Dieser Effekt wurde mit Hilfe von modifizierten ASTM D4340 Korrosionstests bei 150 °C über 168 Stunden unter Verwendung von flussmittelhaltigem Wasser und anschließender Messung der Korrosionsrate in mg/cm²/Woche und Messung des Siliziumgehalts in ppm getestet.

Das silikathaltige Kühlmittelkonzentrat enthält 0,1 Gew.-% bis 2 Gew.-% einer gesättigten aliphatischen oder aromatischen Monocarbonsäure mit sechs bis 12 Kohlenstoffatomen (C6 bis C12). Typische Vertreter der Stoffklasse der gesättigten aliphatischen Monocarbonsäuren sind Pentansäure, Hexansäure, 2-Ethylhexansäure, Heptansäure, Octansäure, Nonansäure, Isononansäure, Decansäure, Undecansäure, Dodecansäure.

Die Monocarbonsäure wirkt als Rostschutz, da die Monocarbonsäure als Carboxylation vor liegt und sich auf der Metalloberfläche anlagert, so dass der Elektrolyt nicht an die Metalloberfläche (metallische Oberfläche des Kühlers bzw. Kühlsystems) gelangt.

Bei den hydroxylgruppenhaltigen aromatischen Carbonsäuren handelt es sich um Carbonsäuren, die von Benzoesäure abgeleitet sind. Sie weisen ein oder zwei Hydroxylgruppen auf. Geeignete hydroxylgruppenhaltige aromatische Monocarbonsäuren sind 2- oder 3-Hydroxybenzoesäure und insbesondere 4-Hydroxybenzoesäure oder 2-, 3- oder 4-(Hydroxymethyl)-benzoesäure.

Das Konzentrat enthält als Additiv wenigstens ein Azol. Typische Beispiele sind Tolyltriazol, hydriertes Tolyltriazol, Methylbenzotriazol, Butylbenzotriazol, 1H-1,2,4-Triazol, Benzotriazol, Benzothiazol, 2-Mercaptobenzthiazol, substituierte Thiazole, Imidazole, Benzimidazole, Indazole, Tetrazole, (2-Benzothiazylthio)-essigsäure. In dem Kühlmittelkonzentrat sind zwischen 0,01 Gew.-% bis 0,5 Gew.- % bezogen auf die Gesamtmenge des Konzentrats Azole enthalten. Kombinationen von zwei oder mehreren der oben genannten Verbindungen können ebenso verwendet werden und sind im Ausdruck Azol mit inbegriffen.

Geeigneter Weise enthält das Kühlmittelkonzentrat 0,01 Gew.-% bis 0,06 Gew.-%, bezogen auf die Gesamtmenge des Konzentrats, eines stabilisierten Silikats. Das Silikat wird in üblichen Mengen mittels Silikatstabilisatoren stabilisiert.

Geeignete Silikate sind solche vom Typ (MO)ₘSiO_{(4n/2)}(OH)ₚ, bei welchen M ein einwertiges Kation aus der Gruppe Lithium, Natrium, Kalium, Rubidium oder Tetraorganoammonium, m von 1 bis 4, n von 1 bis 4 und p von 0 bis 3 ist, wobei m + p = n vorausgesetzt wird. Beispiele hierfür sind Kaliummetasilikat, Natriumorthosilikat, Kaliumdisilikat, Natriummetasilikat, Kaliummetasilikat, Lithiummetasilikat, Lithiumorthosilikat, Rubidiumdisilikat, Rubidiumtetrasilikat, gemischte Silikate, Tetramethylammoniumsilikat, Tetraethylammoniumsilikat, Ammoniumsilikat, Tetrahydroxyethylammonium-silikat. Geeignet sind auch organische Silikatester vom Typ Si(OR)₄, wobei R eine Alkyl-, Aryl- oder Hydroxyalkylgruppe zwischen Cl und C36 sein kann. Geeigneter Weise werden jedoch Alkalimetallmetasilikate eingesetzt.

Als Silikatstabilisator können Organosilane wie Silquest^{®} Y-5560 oder Silan AF-1, Natrium-(Trihydroxysilyl)-propylmethylphosphonat wie Xiameter^{®} Q1-6083, Alkalimetallaminophosphonate, organische Phosphosilicone vom Typ (O_{1,5}Si-C₃H₆)-P(O)(O⁻Na⁺)(OC₂H₅), wie in der US 4 629 602 beschrieben, Polyacrylsäuren, Methylcellulose oder Borate zum Einsatz kommen.

Die gefrierpunkterniedrigende Flüssigkeit ist eine Verbindung aus der Gruppe umfassend Alkylenglykole, Alkylenglykolether, Glykolether, Glyzerin oder eines Gemisches zweier oder mehrerer dieser Verbindungen. Als Vertreter dieser Substanzklassen kommen Monoethylenglykol, Monopropylenglykol, Diethylenglykol, Dipropylengylkol, Triethylenglykol, Tripopylenglykol, Tetraethylenglykol, Methyl-, Ethyl-, Propyl-, Butylether zum Einsatz. Besonders geeignet ist Monoethylenglykol.

Die Dicarbonsäuren weist vorzugsweise eine Kettenlänge zwischen vier bis 12 Kohlenstoffatomen (C4 bis C12) auf, da Carbonsäuren mit Kettenlängen von mehr als 12 Kohlenstoffatomen nicht löslich sind.

Geeigneter Weise wird eine Mischung aus zwei verschiedenen gesättigten aliphatischen Dicarbonsäuren mit vier bis 12 Kohlenstoffatomen (C4 bis C12) eingesetzt. Typische Vertreter der Dicarbonsäuren sind Malonsäure, Bernsteinsäure, Glutarsäure, Adipinsäure, Pimelinsäure, Korksäure (C₈H₁₄O₄), Azelainsäure, Sebacinsäure, Undecandisäure, Dodecandisäure, Terephtalsäure, Dicyclopentadiendicarbonsäure. Besonders gute Ergebnisse wurden mit einer Mischung aus Adipinsäure und Sebacinsäure erzielt.

Die Dicarbonsäuren und/oder die Monocarbonsäuren liegen vorzugsweise in Form ihrer Alkali- oder Erdalkalimetallsalze vor. Natrium- und Kaliumsalze sind besonders geeignet. Wird eine Mischung aus Adipinsäure und Sebacinsäure als Dicabonsäuren verwendet, so werden beide entweder in Form des Dikaliumsalzes eingesetzt oder die Sebacinsäure als Dinatriumsalz und die Adipinsäure als Dikaliumsalz.

Als weitere Additive werden wenigstens eine Phosphonocarbonsäure oder Mischungen davon verwendet. Der Begriff Phosphonocarbonsäure schließt sowohl die freien Carbonsäuren als auch die Carboxylate mit ein. Beispiele hierfür sind Phosphonobernsteinsäure, 1,2,3,4,5,6-Hexacarboxyhexan (1,2,3,4,5,6-Hexaphosphonocarboxyhexan), 1-Hydroxy-1,1 -Diphosphonsäure (1-Hydroxy-1,1-Diphosphonocarbonsäure), 1-Phosphono-1,2,3,4-Tetraphosphonsäure (1-Phosphono-1,2,3,4-Tetraphosphoncarbonsäure), Aminotrimethylphosphonsäure, Phosphonsäure (Phosphonocarbonsäure), 2-Phosphonobutan-1,2,4-Tricarbonsäure, 1-Phosphono-1-Hydroxyessigsäure, Hydroxymethyl-phosphonsäure und weitere. Der Anteil bezogen auf die Gesamtmenge des Konzentrats liegt zwischen 0,01 Gew.-% und 0,5 Gew.-%.

Das Kühlmittelkonzentrat enthält als Additiv zwischen 0,01 Gew.-% bis 1 Gew.-% bezogen auf die Gesamtmenge des Konzentrats wenigstens eines Heteropolykomplexanions aus der Gruppe IIIA bis VIA des Periodensystems der Elemente.

Vorzugsweise ist das Heteropolykomplexanion ein Phosphomolybdat mit der Formel (PMo₁₂O₄₀)³⁻.

Die Phosphonocarbonsäure ist vorzugsweise 2-Phosphonobutan-1,2,4-tricarbonsäure.

In einer bevorzugten Ausführungsform der Erfindung enthält das Kühlmittelkonzentrat eine pH-justierende Komponente. Die pH-justierende Komponente dient dazu den pH-Wert des Kühlmittels einzustellen. Geeignete pH-justierende Komponenten sind Verbindungen wie Kalilauge, Natronlauge oder Natriumphosphat.

Der pH-Wert des silikathaltigen, flussmittelresistenten Kühlmittelkonzentrats liegt vorzugsweise im Bereich von 6 bis 10 und insbesondere im Bereich von 7,5 bis 8,5. Dabei kann der gewünschte pH-Wert durch Zugabe von Alkalimetallhydroxid zur (Kühlmittelkonzentrat-)Formulierung eingestellt werden. Die aliphatischen Carbonsäuren werden zweckmäßigerweise gleich in Form ihrer Alkalimetallsalze eingesetzt, so dass sich der pH-Wert der Formulierung im gewünschten Bereich von selbst einstellt. Alternativ können jedoch auch die freien (Carbon-)Säuren eingesetzt werden, welche mit Alkalimetallhydroxid neutralisiert werden. Am geeignetsten hierfür sind festes Natriumhydroxid oder Kaliumhydroxid bzw. wässrige Natronlauge oder Kalilauge.

Schließlich können bis zu 0,5 Gew.-%, bezogen auf die Gesamtmenge des Konzentrates, einer oder mehrerer Hartwasserstabilisatoren auf Basis von Polyacrylsäure, Polymaleinsäure, Acrylsäure-Maleinsäure-Copolymeren, Polyvinylpyrrolidon, Polyvinylimidazol, Vinylpyrrolidon-Vinylimidazol-Copolymeren und/oder Copolymeren aus ungesättigten Carbonsäuren und Olefinen vorhanden sein. Jedoch werden niedermolekulare Stoffe, wie zum Beispiel 2-Phosphonobutan-1,2,4-tricarbonsäuren, bevorzugt eingesetzt.

Das Kühlmittelkonzentrat (bzw. die Wärmeträgerflüssigkeit) kann weiter Korrosionsinhibitoren wie pH-Puffer, geradkettige, verzweigte oder aromatische Monocarbonsäuren, Dicarbonsäuren, Tricarbonsäuren, Molybdate, Borate, Nitrite, Amine, Phosphate oder Silikone enthalten.

Als weitere Hilfsmittel können dem Kühlmittelkontentrat in geringe Mengen Entschäumer, in der Regel zwischen 0,001 Gew.-% bis 0,02 Gew.-%, einzelne oder mehrere Farbstoffe und Bitterstoffe als Sicherheit im Falle des Verschluckens beigesetzt werden. Ein Beispiel für einen Bitterstoff ist Denatoniumbenzoat, welches unter dem Handelsnamen Bitrex^{®} erhältlich ist.

In einer Ausführungsform der Erfindung umfasst das Kühlmittelkonzentrat
- mehr als 90 Gew.-% bezogen auf die Gesamtmenge des Konzentrats mindestens einer gefrierpunkterniedrigenden Flüssigkeit,
- 1,5 bis 5 Gew.-% bezogen auf die Gesamtmenge des Konzentrats mindestens eines Gemischs von mindestens zwei gesättigten aliphatischen Dicarbonsäuren,
- 0,1 bis 1 Gew.-% bezogen auf die Gesamtmenge des Konzentrats mindestens einer gesättigten aliphatischen oder hydroxylhaltigen aromatischen Monocarbonsäure,
- 0,05 bis 0,5 Gew.-% bezogen auf die Gesamtmenge des Konzentrats mindestens eines Azols,
- 0,01 bis 0,06 Gew.-% bezogen auf die Gesamtmenge des Konzentrats mindestens eines stabilisierenden Silikats,
- 0,01 bis 1 Gew.-% bezogen auf die Gesamtmenge des Konzentrats mindestens einer Phosphonocarbonsäure und
- 0,01 bis 1 Gew.-% bezogen auf die Gesamtmenge des Konzentrats wenigstens eines Heteropolykomplexanions aus der Gruppe IIIA bis VIA des Periodensystems der Elemente.

Des Weiteren wird die Aufgabe der vorliegenden Erfindung durch eine Verwendung des Kühlmittelkonzentrats, als Wärmeträgerflüssigkeit, zur Kühlung eines Verbrennungsmotors, einer Solaranlage oder eines Kühlschrankes gelöst.

Durch die Flussmittelresistenz des Kühlmittelkonzentrats ist es besonders für die Verwendung in Kühlern bzw. Kühlsystemen von Verbrennungsmotoren, wie beispielsweise von Kraftfahrzeugen, geeignet.

Durch die Verwendung von ungiftigen gefrierpunkterniedrigenden Flüssigkeiten, wie beispielsweise Propylenglykol, kann das silikathaltige Kühlmittelkonzentrat auch im Lebensmittelbereich eingesetzt werden.

Im Folgenden wird die Erfindung anhand von Beispielen näher beschrieben:
Das hier beschriebene silikathaltige, nitrit-, nitrat-, borat- und aminfreie Kühlmittelkonzentrat für Verbrennungskraftmaschinen, basierend auf einem Gemisch von Carbonsäuren, Azolen, Phosphonocarbonsäure, sowie wenigstens einem Heteropolykomplexanions aus der Gruppe IIIA bis VIA des Periodensystems der Elemente, Alkylenglykolen oder deren Derivaten.

Weitere mögliche Bestandteile des silikathaltigen Kühlmittelkonzentrats sind beispielsweise Sabit und/oder Thiopropionsäure, die als Kupferinhibitoren wirken.

Silikat bietet einen hervorragenden Korrosionsschutz insbesondere für Aluminium und seine Legierungen. Bei silikathaltigen Kühlmitteln soll daher verhindert werden, dass es zu einem Abbau des Silikat- bzw. Siliziumgehalts kommt, da anderenfalls der Korrosionsschutz beeinträchtigt wird.

Das Kühlmittelkonzentrat weist eine erhöhte thermische Stabilität und eine gesteigerte Verträglichkeit gegenüber Flussmittelrückständen auf.

### Vergleichstest:

Modifizierte ASTM D4340 Korrosionstests wurden mit unterschiedlichen silikathaltigen Kühlmitteln durchgeführt. 250 ml Kühlmittel wurden stets mit je 250 ml NOCOLOK^{®}-Wasser (2000 mg/l) versetzt, der anfängliche Siliziumgehalt mittels AAS (Atomabsorptionspektroskopie) bestimmt und anschließend die Kühlmittel für 8 Stunden in der Testapparatur, welche eine heiße Oberfläche eines Zylinderkopfs aus Aluminium in einem Verbrennungsmotor simuliert, auf 150 °C erhitzt. Nachdem die Kühlmittel erneut Raumtemperatur erreicht hatten, wurden 5 ml eines jeden Kühlmittels mit einem 0,45 µl Filter filtriert und anschließend erneut der Siliziumgehalt bestimmt. Die nachfolgende Tabelle zeigt repräsentative Beispiele für Kühlmittelzusammensetzungen sowie die Abnahme des Silikatgehalts in Prozent über die Versuchsdauer von 8 h.

| **Komponente** | **Kühlmittel 1 (in Gew.-%)** | **Kühlmittel 2 (in Gew.-%)** | **Kühlmittel 3 (in Gew.-%)** | **Kühlmittel 4 (in Gew.-%)** |
|---|---|---|---|---|
| Monoethylenglykol | 91,02 | 90,64 | 93,34 | 92,24 |
| Kalilauge (45 %) | 4,62 | 5,60 | 3,00 | 3,40 |
| 2-Ethylhexansäure | --- | --- | 3,20 | 3,00 |
| Sebacinsäure | 3,00 | 0,40 | 0,20 | --- |
| Hydroxybenzoesäure | 0,40 | --- | --- | --- |
| Adipinsäure | 0,30 | 3,00 | --- | 0,30 |
| Isononansäure | --- | --- | --- | 0,40 |
| Tolyltriazol | 0,20 | --- | 0,10 | 0,10 |
| Benzotriazol | --- | 0,20 | --- | 0,10 |
| Heteropolykomplexanion | 0,30 | --- | --- | 0,30 |
| Natriummetasilikatpentahydrat | 0,16 | 0,16 | 0,16 | 0,16 |
| | | | | |
| Siliziumgehalt (ppm, Anfang) | 117 | 124 | 120 | 112 |
| Siliziumgehalt (ppm, Ende) | 100 | 32 | 25 | 90 |
| | | | | |
| **Δ Si (%)** | **15** | **75** | **80** | **20** |

Alle in der Tabelle aufgeführten Kühlmittel enthalten die gleiche Menge an Silizium in Form von Alkalimetallsilikaten, nämlich 0,16 Gew.-%. Die Kühlmittel 1 und 4 sind silikathaltige Kühlmittelkonzentrate gemäß der vorliegenden Erfindung.

Wie aus der Tabelle ersichtlich, ist die Abnahme des Siliziumgehalts im Kühlmittel (Δ Si [%]), und damit auch die Abnahme des Silikatgehalts im Kühlmittel, bei den Kühlmitteln 1 und 4 signifikant geringer als bei den Kühlmitteln 2 und 3, die kein Heteropolykomplexanion enthalten.

## Patentansprüche

1. Silikathaltiges Kühlmittelkonzentrat umfassend
- mehr als 90 Gew.-% bezogen auf die Gesamtmenge des Konzentrats mindestens einer gefrierpunkterniedrigenden Flüssigkeit, wobei die gefrierpunkterniedrigende Flüssigkeit eine Verbindung aus der Gruppe umfassend Alkylenglykole, Alkylenglykolether, Glykolether, Glyzerin oder eines Gemisches zweier oder mehrerer dieser Verbindungen ist,
- 1,5 bis 5 Gew.-% bezogen auf die Gesamtmenge des Konzentrats mindestens eines Gemischs aus mindestens zwei gesättigten aliphatischen Dicarbonsäuren,
- 0,1 bis 1 Gew.-% bezogen auf die Gesamtmenge des Konzentrats mindestens einer gesättigten aliphatischen oder hydroxylhaltigen aromatischen Monocarbonsäure,
- 0,05 bis 0,5 Gew.-% bezogen auf die Gesamtmenge des Konzentrats mindestens eines Azols,
- 0,01 bis 0,06 Gew.-% bezogen auf die Gesamtmenge des Konzentrats mindestens eines stabilisierenden Silikats,
- 0,01 bis 1 Gew.-% bezogen auf die Gesamtmenge des Konzentrats mindestens einer Phosphonocarbonsäure und
- 0,01 bis 1 Gew.-% bezogen auf die Gesamtmenge des Konzentrats mindestens eines Heteropolykomplexanions aus der Gruppe IIIA bis VIA des Periodensystems der Elemente,
wobei das Heteropolykomplexanion ein Molybdatanion ist oder ein Anion aus der Gruppe umfassend Phosphomolybdate, Siliziummolybdate, Manganmolybdate, Siliziumwolframate, Telluriummolybdate, Arseniummolybdate oder einer Mischung hiervon ist und
wobei die Monocarbonsäure eine von Benzoesäure abgeleitete Carbonsäure mit ein oder zwei Hydroxylgruppen ist.

2. Kühlmittelkonzentrat gemäß Anspruch 1, **dadurch gekennzeichnet, dass** die Dicarbonsäuren eine Kettenlänge zwischen vier bis 12 Kohlenstoffatomen aufweisen.

3. Kühlmittelkonzentrat gemäß Anspruch 1 oder 2, **dadurch gekennzeichnet, dass** die Dicarbonsäuren und/oder die Monocarbonsäuren in Form ihrer Alkali- oder Erdalkalimetallsalze vorliegen.

4. Kühlmittelkonzentrat nach einem der Ansprüche 1 bis 3, **dadurch gekennzeichnet, dass** das Heteropolykomplexanion ein Phosphomolybdat mit der Formel (PMo₁₂O₄₀)³⁻ ist.

5. Kühlmittelkonzentrat nach einem der Ansprüche 1 bis 4, **dadurch gekennzeichnet, dass** die Phosphonocarbonsäure 2-Phosphonobutan-1,2,4-tricarbonsäure ist.

6. Kühlmittelkonzentrat nach einem der Ansprüche 1 bis 5, **dadurch gekennzeichnet, dass** eine pH-justierende Komponente enthalten ist.

7. Kühlmittelkonzentrat nach einem der Ansprüche 1 bis 6, **dadurch gekennzeichnet, dass** der pH-Wert des Konzentrats im Bereich von 6 bis 10 liegt.

8. Verwendung des Kühlmittelkonzentrats gemäß einem der vorangestellten Ansprüche zur Kühlung eines Verbrennungsmotors, einer Solaranlage oder eines Kühlschrankes.

## Claims

1. A silicate-containing coolant concentrate, including
- more than 90 weight percent with respect to the total amount of the concentrate of at least one freezing-point lowering liquid, wherein the freezing point lowering liquid is a compound of the group including alkylene glycol, alkylene glycol ether, glycol ether, glycerin, or of a mixture of two or more of these compounds,
- 1.5 to 5 weight percent with respect to the total amount of the concentrate of at least one mixture of at least two saturated, aliphatic dicarboxylic acids,
- 0.1 to 1 weight percent with respect to the total amount of the concentrate of at least one saturated aliphatic or hydroxyl-containing aromatic mono-carboxylic acid,
- 0.05 to 0.5 weight percent with respect to the total amount of the concentrate of at least one azole,
- 0.01 to 0.06 weight percent with respect to the total amount of the concentrate of at least one stabilized silicate,
- 0.01 to 1 weight percent with respect to the overall amount of the concentrate of at least one phosphonocarboxylic acid, and
- 0.01 to 1 weight percent with respect to the total amount of the concentrate of at least one heteropoly complex anion from the group IIIA to VIA of periodic table of the elements,
wherein the heteropoly complex anion is a molybdate anion or an anion from the group including phosphomolybdates, silicon molybdates, manganese molybdates, silicon tungstates, tellurium molybdates, arsenic molybdates, or a mixture thereof, and
wherein the mono-carboxylic acid is a carboxylic acid derived from benzoic acid and having one or two hydroxyl groups.

2. The coolant concentrate according to claim 1, **characterized in that** the dicarboxylic acids have a chain length between four and 12 carbon atoms.

3. The coolant concentrate according to claim 1 or 2, **characterized in that** the dicarboxylic acids and/or the monocarboxylic acids are present in the form of their alkaline or alkaline earth metal salts.

4. The coolant concentrate according to one of the claims 1 to 3, **characterized in that** the heteropoly complex anion is a phosphomolybdate of the formula (PMo₁₂O₄₀)³⁻.

5. The coolant concentrate according to one of the claims 1 to 4, **characterized in that** the phosphonocarboxylic acid is 2-phosphonobutane-1,2,4-tricarboxylic acid.

6. The coolant concentrate according to one of the claims 1 to 5, **characterized in that** a pH-adjusting component is contained.

7. The coolant concentrate according to one of the claims 1 to 6, **characterized in that** the pH value of the concentrate is in the range between 6 and 10.

8. Use of a coolant concentrate according to one of the preceding claims for the cooling of a combustion engine, a solar plant or a refrigerator.

## Revendications

1. Concentré de liquide de refroidissement contenant du silicate, comprenant
- plus de 90 % en poids par rapport à la quantité totale du concentré d'au moins un liquide abaissant le point de congélation, dans lequel le liquide abaissant le point de congélation est un composé issu du groupe comprenant des alkylèneglycols, des éthers d'alkylèneglycol, des éthers de glycol, de la glycérine ou un mélange de deux ou de plusieurs desdits composés,
- 1,5 à 5 % en poids par rapport à la quantité totale du concentré d'au moins un mélange composé d'au moins deux acides dicarboxyliques aliphatiques saturés,
- 0,1 à 1 % en poids par rapport à la quantité totale du concentré d'au moins un acide monocarboxylique aliphatique saturé ou aromatique hydroxylé,
- 0,05 à 0,5 % en poids par rapport à la quantité totale du concentré d'au moins un azole,
- 0,01 à 0,06 % en poids par rapport à la quantité totale du concentré d'au moins un silicate stabilisant,
- 0,01 à 1 % en poids par rapport à la quantité totale du concentré d'au moins un acide phosphonocarboxylique, et
- 0,01 à 1 % en poids par rapport à la quantité totale du concentré d'au moins un anion hétéropolycomplexe issu du groupe IIIA à VIA du système périodique des éléments,
dans lequel l'anion hétéropolycomplexe est un anion de molybdate ou un anion issu du groupe comprenant des phosphomolybdates, des molybdates de silicium, des molybdates de manganèse, des silicotungstates, des molybdates de tellure, des molybdates d'arsenium ou un mélange de ceux-ci, et
dans lequel l'acide monocarboxylique est un acide carboxylique dérivé de l'acide benzoïque avec un ou deux groupes hydroxyle.

2. Concentré de liquide de refroidissement selon la revendication 1, **caractérisé en ce que** les acides dicarboxyliques présentent une longueur de chaîne entre 4 à 12 atomes de carbone.

3. Concentré de liquide de refroidissement selon la revendication 1 ou 2, **caractérisé en ce que** les acides dicarboxyliques et/ou les acides monocarboxyliques sont présents sous la forme de leurs sels alcalins ou alcalino-terreux.

4. Concentré de liquide de refroidissement selon l'une quelconque des revendications 1 à 3, **caractérisé en ce que** l'anion hétéropolycomplexe est un phosphomolybdate avec la formule (PM_{O12}O₄₀)³⁻.

5. Concentré de liquide de refroidissement selon l'une quelconque des revendications 1 à 4, **caractérisé en ce que** l'acide phosphonocarboxylique est de l'acide 2-phosphonobutane-1,2,4-tricarboxylique.

6. Concentré de liquide de refroidissement selon l'une quelconque des revendications 1 à 5, **caractérisé en ce qu'**un composant d'ajustement de pH est contenu.

7. Concentré de liquide de refroidissement selon l'une quelconque des revendications 1 à 6, **caractérisé en ce que** la valeur pH du concentré se situe dans la plage de 6 à 10.

8. Utilisation du concentré de liquide de refroidissement selon l'une quelconque des revendications précédentes pour le refroidissement d'un moteur à combustion interne, d'une installation solaire ou d'un réfrigérateur.
